# FASCICULE DE BREVET EUROPEEN

(11) **EP 4 108 057 B1**
(45) Date de publication et mention de la délivrance du brevet: **26.08.2026**
(21) Numéro de dépôt: 22305855.3
(22) Date de dépôt: 13.06.2022
(51) Int. Cl.: A01C 23/00, A01M 7/00

(54) **SYSTÈME DE RÉGULATION DE PRESSION ET DE DÉBIT D'UN PULVÉRISATEUR À PULVÉRISATION LOCALISÉE**
SYSTEM ZUR REGULIERUNG DES DRUCKS UND DER DURCHFLUSSMENGE EINES SPRÜHGERÄTS MIT LOKALISIERTER ZERSTÄUBUNG
SYSTEM FOR CONTROLLING THE PRESSURE AND FLOW OF A SPRAYER WITH LOCALISED SPRAYING

(30) Priorité: 25.06.2021 FR 2106804
(43) Date de publication de la demande: 28.12.2022
(73) Titulaire: SC OPTIMA, 62620 Ruitz (FR)
(72) Inventeur: Houssard, Olivier, 62232 Fouquières-lès-Béthune (FR); Sochala, Nicolas, 59249 Aubers (FR)
(74) Mandataire: RVDB

(56) Documents cités:
- EP-A1- 3 821 689
- FR-A1- 2 667 001
- GB-A- 2 165 469
- GB-A- 2 337 984

## Description

### Domaine technique

La présente invention concerne le domaine de l'électronique et plus particulièrement le domaine des systèmes de régulation de pression et débit pour pulvérisateur.

Un des objets de la présente invention vise à proposer une solution de régulation de pression et de débit pour un pulvérisateur capable de pulvériser de façon localisée un liquide (par exemple un liquide phytosanitaire) sur une surface (par exemple une surface agricole, surface foliaire, etc.).

Un des autres objets de la présente invention concerne un engin agricole du type véhicule d'épandage comprenant une rampe de pulvérisation équipée d'une pluralité de buses de pulvérisation et un système de régulation de pression et de débit dans le circuit.

La présente invention trouvera de façon non-exclusive des applications avantageuses dans le domaine agricole et/ou viticole notamment en se couplant à un calculateur pour pulvérisateur afin de réguler la pression dans le circuit des rampes d'épandage et de maintenir constant le débit à la sortie de chaque buse.

### Etat de l'art

On connaît dans le domaine agricole et viticole les pulvérisateurs.

Les pulvérisateurs sont classiquement destinés à pulvériser des produits sur les cultures sous forme de liquide.

On parle également d'intrants.

De tels pulvérisateurs sont par exemple utilisés pour appliquer sur les cultures des engrais foliaires pour désherber ou encore pour traiter les cultures contre certaines maladies et/ou lutter contre certains insectes (insectes, acariens, etc.) qui sont susceptibles de nuire à la récolte.

Un pulvérisateur comporte généralement un réservoir de stockage contenant le liquide à pulvériser ; ce réservoir est raccordé à un circuit équipé d'une pompe (ou équivalent) et d'une ou plusieurs buses de pulvérisation.

De tels pulvérisateurs peuvent équiper un véhicule motorisé de type par exemple tracteur, automoteur ou encore aéronef (autonome ou non).

On parle de véhicules d'épandage.

Aujourd'hui, on connaît des pulvérisateurs qui intègrent un système électronique de pilotage comprenant un calculateur central apte à piloter de façon indépendante les différentes sorties de l'ensemble des buses.

Dans le domaine de l'agriculture, certains véhicules d'épandage comprennent un système de pulvérisateur composé d'une rampe articulée à l'arrière (ou à l'avant) du véhicule.

Une telle rampe peut par exemple faire plusieurs dizaines de mètres de large et les buses de pulvérisation peuvent être fixées sur la rampe par exemple environ tous les cinquante centimètres, voire tous les vingt-cinq centimètres.

Les dimensions et les espacements ci-dessus sont fournis ici à titre purement indicatifs et ne présentent en aucun cas un caractère limitatif ou restrictif.

Ainsi, toujours selon cet exemple, un véhicule d'épandage qui est équipé d'une rampe de quarante-huit mètres de large avec une buse fixée tous les cinquante centimètres va comporter un calculateur central capable de piloter en temps réel et de façon indépendante quatre-vingt-seize buses fixées sur la rampe.

Un tel pilotage des buses (temps réel et indépendant) permet de réaliser une pulvérisation localisée pour pulvériser le champ de façon parcellaire, c'est-à-dire sur des courtes sections de parcelle du champ ; on comprend donc que le pilotage de ces buses pour la pulvérisation localisée peut nécessiter un actionnement simultané de l'ensemble des buses comme un actionnement d'une seule buse. On parle aussi de pilotage buse à buse.

Sur le plan théorique, ce pilotage buse à buse présente de nombreux avantages : il permet de réduire les coûts de pulvérisation et la pollution associée en optimisant l'utilisation du liquide pulvérisé.

De tels systèmes de pulvérisation localisée permettent en outre d'améliorer la précision de la pulvérisation en pulvérisant correctement les sections du champ en fonction des besoins réels.

En revanche, le Demandeur a observé que, sur le plan pratique, pulvériser buse par buse reste difficile à mettre à mettre en œuvre.

Avec les pulvérisateurs actuels, il est en effet très difficile d'assurer cette pulvérisation localisée de façon pleinement satisfaisante car la configuration du circuit d'eau du pulvérisateur ne permet pas d'avoir un débit de pulvérisation stable en sortie de buse.

On observe en effet des temps de transition lors du pilotage d'une seule buse.

Ces temps de transition sont causés par une ouverture de la buse qui entraîne une baisse de pression significative laquelle ne permet pas une pulvérisation optimisée.

En mode « pulvérisation localisée », le Demandeur a constaté qu'il était important de maintenir un débit suffisant en sortie de buses sans temps de transition de manière à ce que la pulvérisation soit optimale.

Or, comme expliqué ci-dessus, on observe systématiquement une perte de pression dans les circuits actuels, laquelle implique un temps de transition pour atteindre le débit souhaité en sortie de buse.

On connaît aussi le document GB 2337984 qui divulgue un système de régulation pneumatique ou à air comprenant un contrôleur de pulvérisateur capable de contrôler des clapets anti-retour de pulvérisateur sur des tronçons de buses de pulvérisation.

Le Demandeur soumet que, pour ces raisons, les pulvérisateurs qui sont connus jusqu'à présent et qui comprennent un module de pilotage des buses pour pulvériser de façon localisée et indépendante chacune des buses ne sont pas efficaces.

### Résumé et objet de la présente invention

La présente invention vise à améliorer la situation décrite ci-dessus.

La présente invention vise notamment à remédier à au moins l'un des différents problèmes techniques mentionnés ci-dessus en proposant une solution de pulvérisation buse à buse optimale et adaptable au circuit existant.

L'objet de la présente invention concerne selon un premier aspect un système de pulvérisation buse à buse pour engin notamment agricole.

Selon la présente invention, le système comprend un système de pulvérisation selon la revendication 1.

Avantageusement, le système selon la présente invention comprend en outre des moyens de régulation configurés pour maintenir une pression constante dans le circuit de pulvérisation de manière à maintenir constant un débit cible déterminé en sortie de chaque buse.

Grâce aux caractéristiques techniques ci-dessus, et notamment l'intégration de ces moyens de régulation de la pression, on dispose d'un système de pulvérisation assurant une pulvérisation buse à buse sans temps de transition, avec une pression et un débit constant.

La régulation de la pression assure donc une pulvérisation localisée (buse à buse) avec un débit constant en sortie de chaque buse.

On observe également que cette régulation permet d'avoir une circulation continue du liquide dans le circuit de pulvérisation, ce qui limite les risques de décantation du liquide dans le circuit et le colmatage des conduits du circuit.

Dans un mode de réalisation avantageux, les moyens de régulation comportent :
- une pompe située en aval dudit circuit sur la boucle d'arrivée entre le réservoir et la rampe de pulvérisation, la pompe étant apte à injecter dans le circuit de pulvérisation le liquide selon un débit déterminé ; et
- une vanne de régulation située en amont du circuit sur la boucle de retour entre la rampe de pulvérisation et le réservoir, la vanne de régulation étant apte à réguler la pression dans le circuit de pulvérisation.

L'agencement de cette pompe en aval couplée à une vanne de régulation en amont permet de garantir une pression constante dans le circuit.

Avantageusement, les moyens de régulation comportent un capteur de pression situé en aval du circuit sur la boucle d'arrivée ; un tel capteur de pression est apte à mesurer une pression dans le circuit de pulvérisation en entrée de la rampe de pulvérisation.

De préférence, le capteur de pression est situé entre la pompe et la rampe de pulvérisation.

Avantageusement, les moyens de régulation comportent une unité centrale apte à recevoir l'information relative à la pression mesurée par le capteur de pression et à piloter l'ouverture et la fermeture de la vanne de régulation pour maintenir une pression constante dans le circuit.

Le capteur de pression fournit donc ici une information sur la pression pour assurer la fonction de régulation.

Dans un mode de réalisation particulier, l'unité centrale est configurée pour calculer un signal de vanne en fonction de la pression mesurée, un tel signal permettant de commander une ouverture ou une fermeture de ladite vanne de régulation afin de maintenir une pression constante dans ledit circuit de pulvérisation.

De préférence, la pression dans le circuit de pulvérisation est maintenue constante à 3 bars.

Avantageusement, le système selon la présente invention comprend en boucle de retour un pressostat apte à détecter la pression en amont dudit circuit et à réguler la pression en cas de dépassement de la pression avec une pression seuil déterminée.

Un tel pressostat joue le rôle de groupe de sécurité.

Selon l'invention, les buses sont à débit variable.

De préférence lesdites buses à débit variable sont des buses à pulsation.

Selon l'invention, les buses à débit variable sont ainsi pilotées électriquement par l'unité de pilotage selon une technologie PWM capable de faire varier le débit de chaque buse en modulant la durée d'ouverture lors d'un cycle d'ouverture/fermeture de ladite buse.

Une telle technologie PWM pour *« Pulse Width Modulation »* (ou modulation de largeur d'impulsion) repose sur le principe de faire varier le débit des buses en modulant la durée du cycle d'ouverture des buses.

De préférence, les buses à débit variable présentent une fréquence d'ouverture/fermeture de 10 à 100 Hertz. En d'autres termes, on comprend ici que chaque buse est capable de s'ouvrir et se fermer 10 à 100 fois par seconde. La modulation du débit de la buse s'effectue donc ici en faisant varier la durée d'ouverture de la buse au sein d'un cycle d'ouverture/fermeture.

Dans un mode de réalisation avantageux de la présente invention, les moyens de régulation comportent en outre :
- un premier débitmètre situé en aval du circuit sur la boucle d'arrivée, le premier débitmètre étant apte à mesurer un premier débit dans le circuit de pulvérisation en entrée de rampe ; et
- un deuxième débitmètre situé en amont du circuit sur la boucle de retour, le deuxième débitmètre étant apte à mesurer un deuxième débit dans le circuit de pulvérisation en sortie de rampe.

De préférence l'unité centrale est configurée pour recevoir les premier et deuxième débits mesurés respectivement en entrée et en sortie de rampe et calculer en fonction des débits mesurés un temps d'ouverture pour chacune des buses pour atteindre le débit cible en sortie de buse.

Dans ce mode, la présence de ces débitmètres en entrée et en sortie de rampe permet donc de contrôler le débit en plus de la mesure de pression.

Dans ce mode, le capteur de pression permet quant à lui de contrôler une pression idéale dans le circuit (par exemple 3 bars). Il est alors possible de contrôler le débit qui passe dans chacune des buses ouvertes. Le capteur de pression permet ainsi de détecter le bouchage d'une buse.

De préférence, il est prévu une vanne de régulation rapide.

De préférence, la vanne de régulation est du type PWM ; celle-ci est configurée pour positionner instantanément une consigne de retour en cuve, fonction du débit et de la pression souhaités dans la ou les buses ouvertes.

L'objet de la présente invention concerne selon un deuxième aspect un engin de pulvérisation comprenant un système de pulvérisation tel que décrit ci-dessus.

Un tel engin est du type par exemple un engin d'épandage.

Ainsi, par ses différentes caractéristiques techniques fonctionnelles et structurelles décrites ci-dessus, on dispose d'un système de pulvérisation buse à buse efficace qui assure une pulvérisation sans temps de transition, avec une pression sensiblement constante dans le circuit et un débit constant en sortie de buse ; un tel système peut venir s'adapter sur les circuits existants en apportant un minimum de modifications.

### Brève description des figures annexées

D'autres caractéristiques et avantages de la présente invention ressortiront de la description ci-dessous, en référence aux figures annexées qui en illustrent un exemple de réalisation dépourvu de tout caractère limitatif et sur lesquelles :
[Fig.1]

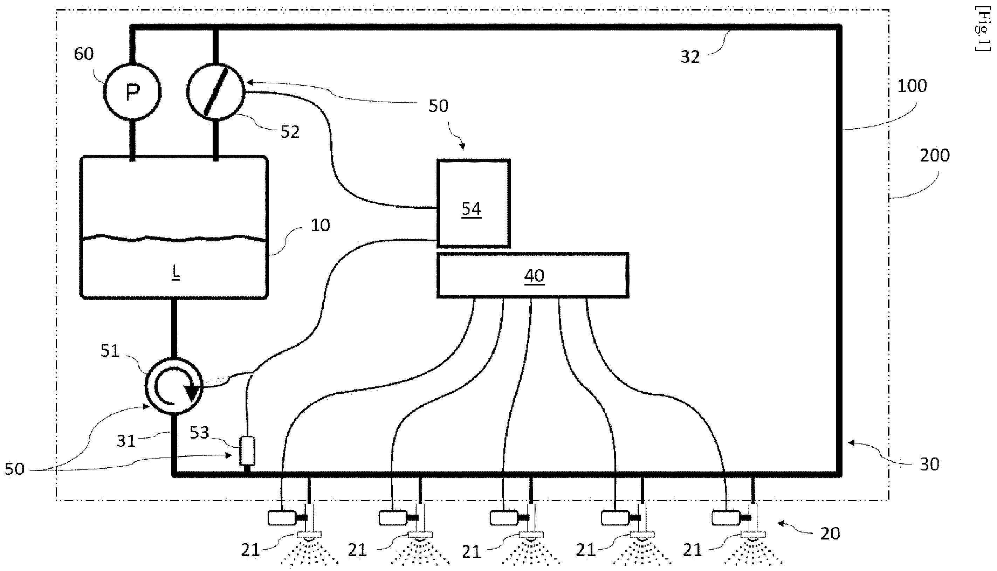

   La [Fig.1] est une vue schématique représentant un système de pulvérisation buse à buse à débit constant selon un premier exemple de réalisation de la présente invention ; et
[Fig.2]

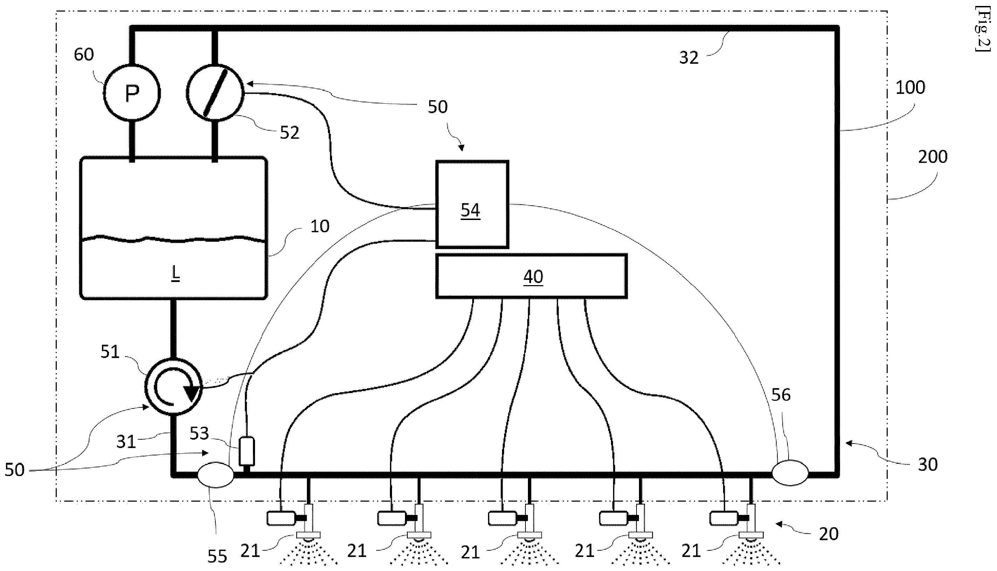

   La [Fig.2] représente une vue schématique représentant un système de pulvérisation buse à buse à débit variable (type PWM) selon un deuxième exemple de réalisation de la présente invention
[Fig.3]

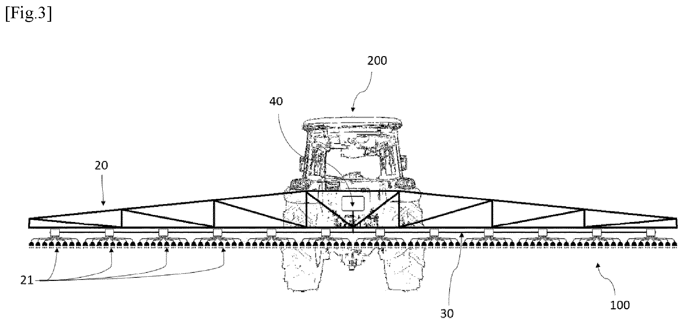

   La [Fig.3] est une vue schématique représentant un véhicule d'épandage comprenant un système de pulvérisation buse à buse conforme à la [Fig.1].

### Description détaillée

Un système de pulvérisation buse à buse selon deux exemples de réalisation de la présente invention ainsi que le véhicule associé vont maintenant être décrits dans ce qui va suivre en référence conjointement aux figures 1 à 3.

Le premier exemple décrit ici portera plus précisément sur un véhicule d'épandage 200 tel qu'illustré en [Fig.3]. On comprendra qu'il s'agit d'un exemple de réalisation parmi d'autres possibles et que la présente invention pourra se rapporter à tout type de pulvérisateur.

Dans le premier exemple de réalisation de la [Fig.1], le véhicule d'épandage 200 comprend donc un système de pulvérisation 100 comportant :
- un réservoir 10 contenant un liquide L à pulvériser tel que par exemple un liquide phytosanitaire ; et
- une rampe de pulvérisation 20 présentant au moins un tronçon avec une pluralité de buses de pulvérisation 21.

Classiquement, le système de pulvérisation 100 présente un circuit 30 qui relie en boucle le réservoir 10 à la rampe 20.

On comprend ici que le réservoir 10 est relié à l'entrée de la rampe 20 par une boucle d'arrivée 31 du circuit et que la sortie de la rampe 20 est reliée au réservoir 10 par une boucle de retour 32.

Dans cet exemple, on prévoit la mise en œuvre d'une unité de pilotage 40. Une telle unité de pilotage 40 est configurée pour piloter chacune des buses 21 indépendamment les unes des autres.

Une telle unité de pilotage 40 est particulièrement appréciée dans le domaine de l'épandage et de la pulvérisation ; elle permet de faire une pulvérisation localisée. En pilotant les buses indépendamment les unes des autres, il est possible de pulvériser des portions de parcelles et donc de réduire la pulvérisation en fonction de la surface à traiter par exemple.

Cette pulvérisation localisée répond à de nombreux enjeux écologiques en permettant de réduire, ou à tout le moins d'optimiser, l'utilisation des intrants sur les surfaces agricoles. Dans ce premier exemple de réalisation non conforme à l'invention et illustré en [Fig.1], les buses 21 sont à débit fixe. En d'autres termes, on utilise dans cet exemple des buses 21 qui sont électriquement commandées en ON/OFF ; ces buses sont donc soit ouvertes soit fermées.

Comme expliqué en préambule, la pulvérisation localisée avec ce type de buses 21 reste toutefois difficile à mettre en œuvre.

On observe en effet des temps de transition lors du pilotage des buses ; avec ce pilotage, le débit en sortie de buses n'est pas constant et la pulvérisation est inefficace sur la période de pulvérisation de sorte que ce pilotage buse à buse reste inopérant avec les solutions de l'état de l'art.

Un des objectifs de la présente consiste donc à réduire les temps de transition sur les systèmes de pulvérisation buse à buse.

Pour atteindre cet objectif, le concept sous-jacent à la présente invention est de concevoir un système de pulvérisation 100 buse à buse comprenant des moyens de régulation 50 capable de maintenir une pression constante dans le circuit de pulvérisation 30 tout en maintenant constant le débit en sortie de buse.

Dans cet exemple et comme illustré en [Fig.1], les moyens de régulation 50 comportent une pompe 51 et une vanne de régulation 52.

Dans cet exemple, la pompe 51 est située en aval du circuit 30 (c'est-à-dire sur la boucle d'arrivée 31 du circuit 30) entre le réservoir 10 et la rampe de pulvérisation 20.

La vanne de régulation 52 est quant à elle située en amont du circuit 30 (c'est-à-dire sur la boucle de retour 32 du circuit 30) entre la rampe de pulvérisation 20 et le réservoir 10.

On comprend que la pompe 51 est configurée pour injecter dans le circuit de pulvérisation 30 le liquide L selon un débit variable déterminé.

Dans cet exemple, la vanne de régulation 52 est configurée pour réguler la pression dans le circuit de pulvérisation 30. Celle-ci peut se fermer ou s'ouvrir pour assurer cette fonction de régulation.

Dans l'exemple décrit ici, l'ouverture et la fermeture de la vanne 52 sont pilotées par une unité centrale 54. Cette unité centrale 54 comprend un processeur ou équivalent (non représenté ici) mettant en œuvre un modèle de régulation de la pression configuré pour recevoir et traiter le signal de pression provenant du capteur de pression 53 situé en aval du circuit 30 sur la boucle d'arrivée 31.

Ce modèle de régulation est enregistré sur des moyens de mémorisation (non représentés ici), lesquels peuvent par exemple prendre la forme d'une mémoire volatile et/ou non volatile et/ou un dispositif de stockage mémoire qui peut comprendre de la mémoire volatile et/ou non volatile, telle que EEPROM, ROM, PROM, RAM, DRAM, SRAM, flash, ou autre.

Dans cet exemple et comme illustré en [Fig. 1], le capteur de pression 53 est donc positionné à l'entrée de la rampe 20, entre la pompe 51 et la rampe de pulvérisation 20.

Ainsi, le capteur de pression 53 mesure de façon périodique ou continue la pression à l'entrée de la rampe de pulvérisation 20 et transmet à l'unité centrale 54 un signal de mesure comprenant cette mesure de pression.

Le processeur de l'unité centrale 54 traite alors le signal reçu et, en fonction du modèle de régulation, détermine des instructions de commande pour les envoyer à destination de la vanne 52 afin d'activer son ouverture ou sa fermeture et assurer une pression constante dans le circuit de pulvérisation 30.

Ces instructions de commande se présentent donc sous la forme d'un signal dit de vanne comprenant une information sur l'ouverture ou la fermeture de ladite vanne 52.

Ces instructions de commande contenues dans ces signaux d'instructions sont déterminées en fonction du modèle de régulation. Celui-ci prend en considération plusieurs paramètres dont par exemple la configuration du circuit (dimensionnement des conduits par exemple) et/ou les performances de la pompe et/ou les caractéristiques de la vanne et/ou les caractéristiques des buses 21.

Dans cet exemple, on prévoit de maintenir le débit en sortie de chaque buse 21 à environ 0.3 litre par minute avec une pression de 3 bars dans le circuit 30.

L'unité centrale 54 est donc apte à commander la vanne de régulation 52 en fonction d'une mesure de pression à l'entrée de la rampe afin de maintenir un débit cible déterminé en sortie de chaque buse 21 et ainsi limiter les temps de transition.

Pour assurer la sécurité du groupe, on prévoit également sur la boucle de retour 32 un pressostat 60 qui détecte la pression en amont du circuit 30 et régule cette pression en cas de dépassement de la pression avec une pression seuil déterminée.

Le deuxième exemple de réalisation illustré en [Fig.2] comprend l'ensemble des caractéristiques techniques du système décrit ci-dessus et illustré en [Fig.1].

Dans ce deuxième exemple, les buses 21 sont toutefois remplacées ici par des buses à débit variable.

Dans cet exemple, on utilise plus particulièrement des buses à pulsation qui sont pilotées électriquement par l'unité de pilotage 40 selon une technologie PWM laquelle est capable de faire varier le débit de chaque buse 21 en modulant la durée d'ouverture lors d'un cycle d'ouverture/fermeture de la buse.

Une telle technologie est particulièrement efficace sur le plan des performances pour une pulvérisation buse à buse.

Dans cet exemple, on peut par exemple sélectionner l'utilisation de buses avec une fréquence d'ouverture/fermeture comprise entre 10 à 30 Hertz correspondant à 10 à 30 ouvertures/fermetures par seconde.

Dans cet exemple, il est requis de pouvoir maintenir constant le débit en sortie de buse selon un débit cible préalablement déterminé.

Pour ce faire, il est prévu d'équiper les moyens de régulation 50 avec deux débitmètres 55 et 56.

Comme illustré en [Fig.2], le premier débitmètre 55 situé en aval du circuit 30 sur la boucle d'arrivée 31 ; un tel premier débitmètre 55 mesure le premier débit dans le circuit de pulvérisation 30 en entrée de rampe.

Le deuxième débitmètre 56 est quant à lui situé en amont du circuit 30 sur la boucle de retour 32 ; un tel deuxième débitmètre 56 mesure donc ici le deuxième débit dans le circuit de pulvérisation 30 en sortie de rampe.

Dans cet exemple, l'unité centrale 54 va donc recevoir les premier et deuxième débits mesurés respectivement en entrée et en sortie de rampe, puis calculer en fonction de ces débits mesurés un temps d'ouverture pour chacune des buses pour atteindre le débit cible en sortie de buse. Grâce au premier 55 et au deuxième 56 débitmètres, il est alors possible de contrôler le débit qui passe dans la ou les buses ouvertes et, grâce au capteur de pression 53, il est possible de contrôler la pression idéale (exemple 3 bars) dans le circuit.

Selon cette configuration, il devient également possible, pour chaque buse, de laisser passer un débit spécifique.

Prenons ici l'exemple des cinq buses 21 illustrées en [Fig.2].

Dans cet exemple, on considère que le débit du fluide qui circule dans la tuyauterie du circuit (en entrée de la rampe) est de 60 litres par minutes.

Dans cet exemple, on souhaite alimenter chaque buse de la façon suivante (pulvérisation en tournant) :
- Buse 1 : 0,5 litre par minutes
- Buse 2 : 0,6 litre par minutes
- Buse 3 : 0,7 litre par minutes
- Buse 4 : 0,8 litre par minutes
- Buse 5 : 0,9 litre par minutes.

Dans cet exemple, le débit total pulvérisé (souhaité) est de 3.5 litres par minutes.

On comprend donc ici que le premier débitmètre 55 mesure ici en entrée de rampe un débit de 60 litres par minutes et que le deuxième débitmètre 56 mesure en sortie de rampe un débit de 56,5 litres par minutes (60 litres par minute - 3,5 litres par minute).

Pour faire varier le débit dans chacune de buses 21, le système fait les varier les temps d'ouvertures PWM des buses et ajuste la pression du circuit grâce à la vanne de régulation 52 (type rapide ou PWM).

Ces temps d'ouvertures sont définis préalablement en fonction d'un étalonnage automatique de buse unitaire.

Ces temps d'ouverture sont calculés par l'unité centrale 54 qui va traiter les informations de débit provenant des premier 55 et deuxième 56 débitmètres et de la consigne de débit souhaité pour chaque buse PWM.

L'étalonnage est transformé en abaque par l'unité 54, qui permet au système en fonction d'un débit dans le circuit principal et d'une pression dans ce circuit de piloter précisément en PWM la ou les buses ouvertes au débit/pression souhaité.

Dans cet exemple, l'unité 54 calcule des temps d'ouverture spécifiques pour chaque buse.

Ces informations sont alors transmises aux buses pour une pulvérisation en temps réel avec un temps d'ouverture calculé assurant un débit précis pour chacune d'elle.

Il devra être observé que cette description détaillée porte sur deux exemples de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

Ainsi, dans le premier exemple de réalisation non conforme à l'invention décrit ci-dessus, il est possible de remplacer les buses à débit fixe par des buses à débit variable de type PWM conformément à l'invention; de la même façon, dans le deuxième exemple de réalisation décrit ci-dessus, il est possible de remplacer non conformément à l'invention les buses à débit variable par des buses à débit fixe.

Il devra également être observé que les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée.

## Revendications

1. Système de pulvérisation (100) buse à buse pour engin (200) notamment agricole comprenant :
- un réservoir (10) contenant un liquide à pulvériser (L) ;
- une rampe de pulvérisation (20) comprenant une pluralité de buses (21) à débit variable aptes à pulvériser ledit liquide (L) ;
- un circuit de pulvérisation (30) raccordant en boucle ledit réservoir (10) et ladite rampe (20) ;
- une unité de pilotage (40) apte à piloter électriquement chaque buse (21) indépendamment l'une de l'autre en faisant varier le débit de chaque buse (21) selon une technologie PWM pour une pulvérisation buse à buse ;
ledit système (100) comprenant en outre des moyens de régulation (50) configurés pour maintenir une pression constante dans ledit circuit de pulvérisation (30) de manière à maintenir constant un débit cible déterminé en sortie de chaque buse (21) en modulant pour chaque buse la durée d'ouverture lors d'un cycle d'ouverture/fermeture)..

2. Système (100) selon la revendication 1, dans lequel les moyens de régulation (50) comportent :
- une pompe (51) située en aval dudit circuit (30) sur la boucle d'arrivée (31) entre ledit réservoir (10) et ladite rampe de pulvérisation (20), ladite pompe (51) étant apte à injecter dans ledit circuit de pulvérisation (30) ledit liquide (L) selon un débit déterminé ; et
- une vanne de régulation (52) située en amont dudit circuit (30) sur la boucle de retour (32) entre ladite rampe de pulvérisation (20) et ledit réservoir (10), ladite vanne de régulation (52) étant apte à réguler la pression dans ledit circuit de pulvérisation (30).

3. Système (100) selon la revendication 1 ou 2, dans lequel les moyens de régulation (50) comportent un capteur de pression (53) situé en aval dudit circuit (30) sur la boucle d'arrivée (31), ledit capteur de pression (53) étant apte à mesurer une pression dans le circuit de pulvérisation (30) en entrée de ladite rampe de pulvérisation (20).

4. Système (100) selon la revendication 3 rattachée à la revendication 2, dans lequel ledit capteur de pression (53) est situé entre la pompe (51) et la rampe de pulvérisation (20).

5. Système (100) selon la revendication 4, dans lequel les moyens de régulation (50) comportent une unité centrale (54) apte à recevoir l'information relative à la pression mesurée par ledit capteur de pression (53) et à calculer un signal de vanne en fonction de ladite pression mesurée pour commander une ouverture ou une fermeture de ladite vanne de régulation (52) afin de maintenir une pression constante dans ledit circuit de pulvérisation (30).

6. Système (100) selon l'une quelconque des revendications précédentes, dans lequel les moyens de régulation (50) comportent en outre :
- un premier débitmètre (55) situé en aval dudit circuit (30) sur la boucle d'arrivée (31), ledit premier débitmètre (55) étant apte à mesurer un premier débit dans le circuit de pulvérisation (30) en entrée de la rampe de pulvérisation (20) ; et
- un deuxième débitmètre (56) situé en amont dudit circuit (30) sur la boucle de retour (32), ledit deuxième débitmètre (56) étant apte à mesurer un deuxième débit dans le circuit de pulvérisation (30) en sortie de la rampe de pulvérisation (20).

7. Système selon la revendication 6, dans lequel l'unité centrale (54) est configurée pour recevoir les premier et deuxième débits mesurés respectivement en boucle d'arrivée (31) et en boucle de sortie (32) et calculer en fonction desdits débits mesurés un temps d'ouverture pour chacune des buses (21) pour atteindre le débit cible en sortie de chaque buse.

8. Système (100) selon l'une quelconque des revendications précédentes, dans lequel la pression dans le circuit de pulvérisation (30) est maintenue constante à 3 bars.

9. Système (100) selon l'une quelconque des revendications précédentes, lequel comprend en boucle de retour (32) un pressostat (60) apte à détecter la pression en amont dudit circuit (30) et à réguler ladite pression en cas de dépassement de ladite pression avec une pression seuil déterminée.

10. Système (100) selon l'une quelconque des revendications précédentes, dans lequel les buses (21) à débit variable présentent une fréquence d'ouverture/fermeture de 10 à 100 Hertz.

11. Engin de pulvérisation (200), notamment engin agricole de type véhicule d'épandage, comprenant un système de pulvérisation (100) selon l'une quelconque des revendications précédentes.

## Patentansprüche

1. Düsen-zu-Düsen-Sprühsystem (100) für eine insbesondere landwirtschaftliche Maschine (200), umfassend:
- einen Behälter (10), der eine zu sprühende Flüssigkeit (L) enthält;
- ein Sprühgestänge (20), die eine Vielzahl von Düsen (21) mit variabler Durchflussmenge umfasst, die imstande sind, die Flüssigkeit (L) zu sprühen;
- einen Sprühkreis (30), der den Behälter (10) und das Gestänge (20) in einer Schleife verbindet;
- eine Steuereinheit (40), die imstande ist, jede Düse (21) unabhängig voneinander durch Variieren lassen der Durchflussmenge jeder Düse (21) gemäß einer PWM-Technologie für ein Düsen-zu-Düsen-Sprühen elektrisch zu steuern;
wobei das System (100) weiter Regelungsmittel (50) umfasst, die konfiguriert sind, um einen konstanten Druck im Sprühkreis (30) aufrecht zu erhalten, um eine bestimmte Zieldurchflussmenge am Ausgang jeder Düse (21) durch Modulieren der Öffnungsdauer bei einem Öffnungs- /Schließzyklus für jede Düse konstant zu halten.

2. System (100) nach Anspruch 1, wobei die Regelungsmittel (50) beinhalten:
- eine Pumpe (51), die sich stromabwärts des Kreises (30) an der Zulaufschleife (31) zwischen dem Behälter (10) und dem Sprühgestänge (20) befindet, wobei die Pumpe (51) imstande ist, die Flüssigkeit (L) gemäß einer bestimmten Durchflussmenge in den Sprühkreis (30) zu injizieren; und
- ein Regelventil (52), das sich stromaufwärts des Kreises (30) an der Rücklaufschleife (32) zwischen dem Sprühgestänge (20) und dem Behälter (10) befindet, wobei das Regelventil (52) imstande ist, den Druck im Sprühkreis (30) zu regeln.

3. System (100) nach Anspruch 1 oder 2, wobei die Regelungsmittel (50) einen Drucksensor (53) beinhalten, der sich stromabwärts des Kreises (30) an der Zulaufschleife (31) befindet, wobei der Drucksensor (53) imstande ist, einen Druck im Sprühkreis (30) am Eingang des Sprühgestänges (20) zu messen.

4. System (100) nach Anspruch 3, verknüpft mit Anspruch 2, wobei sich der Drucksensor (53) zwischen der Pumpe (51) und dem Sprühgestänge (20) befindet.

5. System (100) nach Anspruch 4, wobei die Regelungsmittel (50) eine Zentraleinheit (54) beinhalten, die imstande ist, die Information in Bezug zu dem vom Drucksensor (53) gemessenen Druck zu empfangen und ein Ventilsignal in Abhängigkeit vom gemessenen Druck zu berechnen, um ein Öffnen oder Schließen des Regelventils (52) zu steuern, um einen konstanten Druck im Sprühkreis (30) aufrecht zu erhalten.

6. System (100) nach einem der vorstehenden Ansprüche, wobei die Regelungsmittel (50) weiter beinhalten:
- einen ersten Durchflussmesser (55), der sich stromabwärts des Kreises (30) an der Zulaufschleife (31) befindet, wobei der erste Durchflussmesser (55) imstande ist, eine erste Durchflussmenge im Sprühkreis (30) am Eingang des Sprühgestänges (20) zu messen; und
- einen zweiten Durchflussmesser (56), der sich stromaufwärts des Kreises (30) an der Rücklaufschleife (32) befindet, wobei der zweite Durchflussmesser (56) imstande ist, einen zweiten Durchfluss im Sprühkreis (30) am Ausgang des Sprühgestänges (20) zu messen.

7. System nach Anspruch 6, wobei die Zentraleinheit (54) konfiguriert ist, um die ersten und zweiten gemessenen Durchflussmengen in der Zulaufschleife (31) und in der Ausgangsschleife (32) zu empfangen und in Abhängigkeit von den gemessenen Durchflussmengen eine Öffnungszeit für jede der Düsen (21) zu berechnen, um die Zieldurchflussmenge am Ausgang jeder Düse zu erreichen.

8. System (100) nach einem der vorstehenden Ansprüche, wobei der Druck im Sprühkreis (30) konstant auf 3 bar gehalten wird.

9. System (100) nach einem der vorstehenden Ansprüche, das in der Rücklaufschleife (32) einen Druckschalter (60) umfasst, der imstande ist, den Druck stromaufwärts des Kreises (30) zu erfassen und den Druck bei Überschreitung des Drucks mit einem bestimmten Schwellendruck zu regeln.

10. System (100) nach einem der vorstehenden Ansprüche, wobei die Düsen (21) mit variabler Durchflussmenge eine Öffnungs-/Schließfrequenz von 10 bis 100 Hertz aufweisen.

11. Sprühmaschine (200), insbesondere eine landwirtschaftliche Maschine vom Typ eines Ausbringsungsfahrzeugs, umfassend ein Sprühsystem (100) nach einem der vorstehenden Ansprüche.

## Claims

1. Nozzle-by-nozzle spraying system (100) for a machine (200) particularly agricultural comprising:
- a tank (10) containing a liquid to be sprayed (L);
- a spraying boom (20) comprising a plurality of variable flow nozzles (21) able to spray said liquid (L);
- a spraying circuit (30) connecting in a loop said tank (10) and said boom (20);
- a control unit (40) able to electrically control each nozzle (21) independently of one another by varying the flow rate of each nozzle (21) according to a PWM technology for nozzle-by-nozzle spraying;
said system (100) further comprising control means (50) configured to maintain a constant pressure in said spraying circuit (30) so as to maintain constant a target flow rate determined at the outlet of each nozzle (21) by modulating for each nozzle the opening duration during an opening/closing cycle).

2. System (100) according to claim 1, wherein the control means (50) include:
- a pump (51) located downstream of said circuit (30) on the arrival loop (31) between said tank (10) and said spraying boom (20), said pump (51) being able to inject into said spraying circuit (30) said liquid (L) at a determined flow rate; and
- a control valve (52) located upstream of said circuit (30) on the return loop (32) between said spraying boom (20) and said tank (10), said control valve (52) being able to control the pressure in said spraying circuit (30).

3. System (100) according to claim 1 or 2, wherein the control means (50) include a pressure sensor (53) located downstream of said circuit (30) on the arrival loop (31), said pressure sensor (53) being able to measure a pressure in the spraying circuit (30) at the inlet of said spraying boom (20).

4. System (100) according to claim 3 attached to claim 2, wherein said pressure sensor (53) is located between the pump (51) and the spraying boom (20).

5. System (100) according to claim 4, wherein the control means (50) include a central unit (54) able to receive the information relating to the pressure measured by said pressure sensor (53) and to calculate a valve signal based on said measured pressure to control an opening or closing of said control valve (52) in order to maintain a constant pressure in said spraying circuit (30).

6. System (100) according to any one of the preceding claims, wherein the control means (50) further include:
- a first flowmeter (55) located downstream of said circuit (30) on the arrival loop (31), said first flowmeter (55) being able to measure a first flow rate in the spraying circuit (30) at the inlet of the spraying boom (20); and
- a second flowmeter (56) located upstream of said circuit (30) on the return loop (32), said second flowmeter (56) being able to measure a second flow rate in the spraying circuit (30) at the outlet of the spraying boom (20).

7. System according to claim 6, wherein the central unit (54) is configured to receive the first and second flow rates measured respectively in the arrival loop (31) and in the outlet loop (32) and calculate based on said measured flow rates an opening time for each of the nozzles (21) to reach the target flow rate at the outlet of each nozzle.

8. System (100) according to any one of the preceding claims, wherein the pressure in the spraying circuit (30) is maintained constant at 3 bar.

9. System (100) according to any one of the preceding claims, which comprises in a return loop (32) a pressure switch (60) able to detect the pressure upstream of said circuit (30) and to control said pressure in the event of exceeding said pressure with a determined threshold pressure.

10. System (100) according to any one of the preceding claims, wherein the variable flow nozzles (21) have an opening/closing frequency of 10 to 100 Hertz.

11. Spraying machine (200), particularly agricultural machine of the spreading vehicle type, comprising a spraying system (100) according to any one of the preceding claims.
